# EUROPEAN PATENT SPECIFICATION

(11) **EP 2 557 375 B1**
(45) Date of publication and mention of the grant of the patent: **23.07.2014**
(21) Application number: 11176962.6
(22) Date of filing: 09.08.2011
(51) Int. Cl.: F24J 2/46

(54) **Cleaning apparatus for the surface cleaning of solar modules**
Reinigungsvorrichtung zur Oberflächenreinigung von Solarmodulen
Appareil de nettoyage pour le nettoyage de surface de modules solaires

(43) Date of publication of application: 13.02.2013
(73) Proprietor: Manu Systems AG, 93053 Regensburg-Graß (DE)
(72) Inventor: Johansen, Søren Peter, 5792 Aarslev (DK); Monkman, Gareth, 93053 Regensburg (DE); Schumm, Michael, 96114 Hirschaid (DE); Treiber, Daniel, 94359 Loitzendorf (DE); Patzak, Adrian, 81541 München (DE); Kilbertus, Sebastian, 93105 Tegernheim (DE)
(74) Representative: Hannke, Christian

(56) References cited:
- WO-A1-2004/091816
- DE-A1-102010 008 131
- DE-U1-202009 009 020
- DE-U1-202009 012 816
- KR-A- 20090 090 722

## Description

The invention relates to a cleaning apparatus for the surface cleaning of a plurality of solar modules arranged adjacent to one another and at an angle with respect to the horizontal and with a drive device connected to at least one common upper edge region of the solar modules and capable of being driven along in a first direction in order to move the cleaning apparatus according to the preamble of claim 1.

Cleaning apparatus for solar modules (as photovoltaic modules) are known in various ways. Solar modules of this type are usually arranged at an angle to the horizontal on the ground or on roofs in order to obtain an optimized solar radiation. Consequently, the solar modules are inclined with respect to the horizontal and make it difficult to clean solar module surfaces which are frequently subjected to contamination. Contamination in this way can be for example the deposition of pollen, of sand or soil particles after windy weather or after a storm has occurred. For example in desert regions after a sandstorm a plurality of sand deposits can be present on solar modules of this type which are arranged one beside the other in both directions. Sand deposits of this type are deposited differently with respect to the area of the solar modules. In addition, these sand deposits can have different deposit heights.

Contamination in this way results in the solar modules being reduced in their efficiency with respect to the current yield which occurs as the result of the solar radiation in the case of solar modules of this type comprising solar cells. Such reductions in efficiency can frequently amount to 2 to 70 % of the power efficiency as a whole.

Hitherto there have been cleaning robots which move along the surface of the cohering solar modules either with a pre-set path or by means of a path random generator and with the aid of brushes and optionally suction devices remove the dirt accumulated there. Robots of this type have the drawback that they have to recognize at the edges in the overall arrangement that the risk of the cleaning robot falling from the overall arrangement is very high. In addition, cleaning robots of this type have to be capable both of handling the inclination of the inclined solar module arrangements and of travelling over or bridging frame elements between the individual solar modules.

In addition, it frequently happens that cleaning robots of this type do not clean all the surface portions of the solar module arrangements uniformly, but carry out cleaning of different intensity in the individual surface portions in a manner dependent upon the path travelled and the degree of the contamination. By way of example, a heavy deposit of sand in the lower regions of the overall arrangement of the solar modules inclined obliquely in this way can be removed only to an inadequate degree by cleaning robots travelling over the surface.

A cleaning apparatus according to the preamble of claim 1 is disclosed in DE-202009009020 U.

Consequently the object of the present invention is to make available a cleaning apparatus for the surface cleaning of a plurality of solar modules arranged adjacent to one another and at an angle with respect to the horizontal, which permits a simultaneous cleaning of the entire solar module arrangement with respect to the surface thereof and which is simple in its design.

This object is attained according to the feature of claim 1.

The core concept of the invention is that in the case of a cleaning apparatus of this type for the surface cleaning of a plurality of solar modules - arranged adjacent to one another and at an angle with respect to the horizontal - of at least one drive device connected to at least one common edge region of the solar modules and capable of travelling in a first direction for moving the cleaning apparatus at least one substantially cylindrical elongated brush is provided which for cleaning purposes rotates about its longitudinal axis with a direction of rotation capable of being pre-determined and at a rotational speed capable of being predetermined, in which case the at least one brush extends in the longitudinal axial direction over all the solar modules arranged adjacent to one another in this direction, and the at least one brush is connected to the at least one drive device.

A cleaning apparatus of this type permits the uniform cleaning of all the surface portions of solar module arrangements in a simple manner, i.e. both in the upper and in the lower region of the overall arrangement, as well as in the front and rear region and in the left-hand and in the right-hand region. On account of its extension over the entire length of the solar module arrangement a brush of this type is suitable for being moved from left to right in a simple manner, in which case the brush and/or the drive device can be suspended in a simple manner on the upper edge or the lower edge region of solar modules passing one into the other and arranged adjacent to one another, so that the inherent weight of the cleaning apparatus is suspended both on the surface of the solar modules and on the upper edge region. This permits, on the basis of the action of the inherent weight, a stable fastening of the cleaning apparatus as a whole on solar module arrangements of this type.

It is advantageous not only for a brush to be arranged in front of the drive device which travels from left to right or vice versa, but for an additional brush to be arranged behind the drive device.

The longitudinal axial direction of the at least one brush is orientated as a second direction at a right angle to the first direction. This means that in accordance with a preferred embodiment the brush extends downwards from above onto the surface of the obliquely positioned solar modules and can be moved during its rotation from left to right over the entire surface of the solar module arrangement.

On the surface of the solar modules the direction of rotation of the rotating brush is preferably opposed to a direction of movement of the drive device. This has the advantage that the contamination is removed in a reliable manner from the surface of the solar modules.

In accordance with a preferred embodiment the brush is fastened at the end face in a brush frame connected to the drive device, in which case a brush frame of this type can be provided on the underside, i.e. opposite the surface of solar modules with support elements in the manner of rollers and/or wheels, which supports the brush against the surface of the solar modules. The support elements are capable of rolling in the direction of the first direction on the surface of the solar modules and at the same time when rollers are used they allow a fixing of the direction of movement and thus additional stability of the cleaning apparatus as a whole during the movement thereof on the surface of the solar modules.

The brush frame is connected, in accordance with a preferred embodiment, on one of its longitudinal sides by means of at least one connecting element to the drive device which is elongated in the second direction. As a result, the drive unit can likewise extend in an elongate form downwards from above over virtually the entire height of the solar module arrangement and can allow a reliable connection or suspension of the cleaning brush in a stable form. For this purpose the drive device preferably has caterpillar-like rubber loops, which move on the surface of the solar modules are deflected about corresponding drive rollers which are driven by means of a motor of the drive device, for forward movement from left to right or from right to left respectively on the surfaces of solar modules.

In accordance with a preferred embodiment the connecting element can have at least two rods which extend at a right angle to the first and second directions and which face in a third direction and which are fastened to the brush frame and which are embraced in such a way by at least one third connecting component connected to the drive device that the brush frame is displaceable upwards and downwards in the third direction with respect to the drive device. In this way, an up and down displacement of the brush with respect to the drive device is made possible by means of this rod / hole design. This has the advantageous result that irregularities in the surface of the solar modules which cannot be removed can have the brush travel over them. This is also true of frame elements between the individual solar modules which are arranged adjacent to one another. In this way, frame elements which are possibly arranged on the outer frame region of the solar module arrangement as a whole can be jointly cleaned, since in this region the brush can be deflected upwards. In addition the fact that the right-hand or left-hand end of the solar module arrangement as a whole has been reached and that a movement reversal of the cleaning apparatus into the other direction is necessary is signalled and processed as a warning by means of downwards travel upon reaching this end.

A further embodiment provides that the connecting element has a pivot axis extending in the second direction, the pivot axis being arranged between a first and a second connecting component. In this case the first connecting component is connected to the brush frame and the second connecting component is connected to the drive device. In this way, the rods mentioned above can be omitted and the deflection of the cleaning brush upwards and downwards can be achieved by means of a pivoting movement.
It is possible for at least two second support elements in the manner of rollers and/or wheels to be provided for the suspended support of the cleaning apparatus on the upper edge region preferably in such a way that the entire cleaning apparatus is capable of being rolled by its inherent weight suspended on a top face of the edge region in the first direction. To this end not even additional structures are necessary on the solar module arrangement. In fact the conventional edges of the individual solar modules, which are arranged adjacent to one another, can be used, in order to set the entire cleaning apparatus on the solar module arrangement in a simple manner and to secure it at the top with the support elements in the manner of rollers and/or wheels and/or brushes. This ensures that the cleaning apparatus and thus also the cleaning brushes are always moved at the same height from left to right or vice versa.

In accordance with a further development of the invention the cleaning apparatus has at least one water application device for applying water to the surface of solar modules in the region of the brush. To this end at least one water tank and corresponding line connections to individual nozzles are provided, which can be arranged for example upstream of the brush with respect to the first movement direction. In this way, water is first applied to the surface of the solar modules before the brush subsequently carries out a cleaning of the solar modules. As an alternative, an extern water tank can be used. This water tank can be filled up with rain water in order to reduce the consumption of drinkable water. An eaves gutter collects water flowing from the individual solar panels. This module water (solar module water) is rain water, which is collected at the lower side of the solar modules by passing the surface of the solar modules. Further, the funnel only collects pure (clean) rain water. The water is then cleaned/filtered and stored in some reservoir placed below ground level. From here a pump system can retrieve the water and provide the cleaning apparatus with the necessary cleaning water- perhaps through some surface irrigation system. The tank can contain ten thousand liter spring water or/and rain water. The pump system, the reservoir/tank and the cleaning/filtering system can be positioned outside the cleaning apparatus and the solar modules

(photovoltaic modules). The consumption of water can be 2000 litres per 100 kW of power of the solar modules. Physically, solar module arrangements have for example complete power values of 5-6 MW up to 50 MW or several GW. Typically, the volume of the tank must be in a proportional condition with regard to the surface areas of the complete solar module arrangement.

Further, by using specific sensors, dirty areas on the surfaces of the solar modules can be recognized. Using a specific control system enables that the cleaning apparatus can move forward and backward for several times, in order to remove the dirty area completely. After the sensors have recognized that the dirty area has disappeared, the control system controls the cleaning apparatus to move forward until the next dirty area will be recognized. The operation of this sensor control system is completely automatic.

Further, the speed of the movement of the cleaning apparatus can be varied as well as the rotation speed of the brush.

If two or more rows of solar modules are arranged parallel, wherein the distance between the two rows are small, the brush can be divided into two parts, namely one brush part for the one row and one brush part for the other row. However, both brush parts are connected by common access. Further, the upper and lower edge brushes can be positioned, which are moved up and down in a parallel direction to the surface of the solar modules. This movement is usually one millimetre in order to clean the edges and/or the frames of the photovoltaic modules (solar modules).

Parallel to the cylindrical rotation brushes normal brushes in a long version without any rotation or lateral movement can be arranged in order to clean in addition the surfaces of the solar modules after the rotation brushes have loosen the dirt off the surfaces.

As a result, one brush module comprises one rotation brush, one edge brush and one linear brush, wherein two brush modules can be arranged for each row of solar modules and can be connected together.

According to an embodiment of the invention, the brushes can be arranged on the surfaces of the solar modules with an inclination in order to remove snow from the surfaces. According to another embodiment of the invention, a rain sensor is arranged, which controls the start and stop time-points of the rotation of the brushes and the movement of the cleaning apparatus.

Further advantageous embodiments are set out in the sub-claims.
Advantages and expedient features are evident in the accompanying description in conjunction with the drawing. In the drawing
- Figure 1: is a diagrammatic illustration of a solar module arrangement with a cleaning apparatus according to the invention;
- Figure 2: is a diagrammatic cut-away illustration of part of a cleaning brush with an associated brush frame according to a preferred embodiment of the invention;
- Figure 3: is a perspective plan view of a cleaning brush with an associated brush frame locally above a portion of a solar module according to an embodiment of the invention, and
- Figure 4: a schematic plan view of a cleaning brush according to an embodiment of the invention.

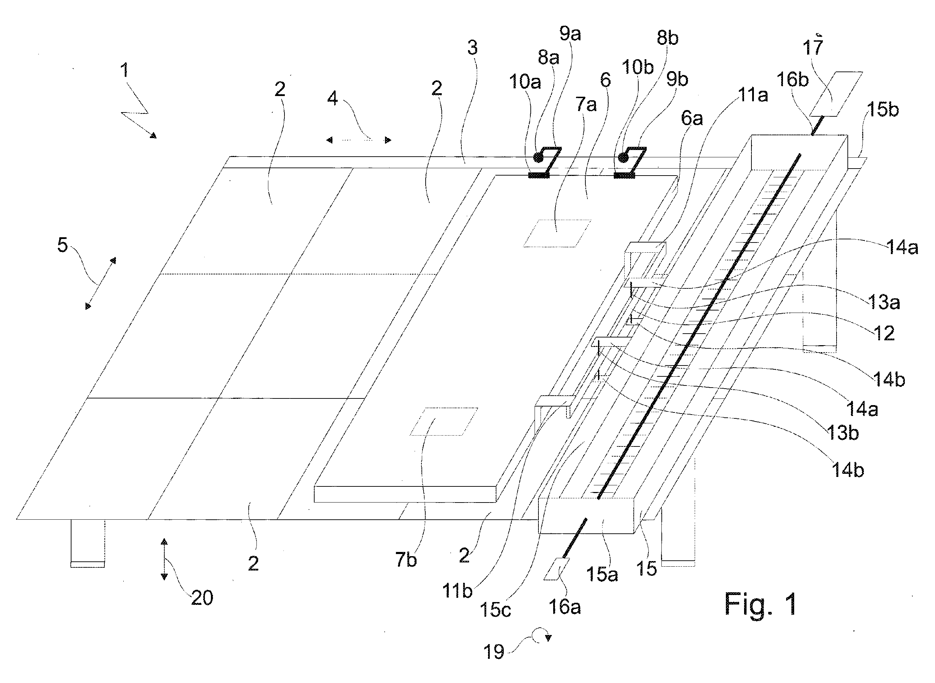

A solar module arrangement with a plurality of solar modules and with a cleaning apparatus according to an embodiment of the invention is reproduced in a diagrammatic illustration in figure 1. It is evident from this illustration that the overall view 1 has a cleaning apparatus and a plurality of solar modules 2 arranged adjacent to one another, the solar modules 2 being arranged adjacent to one another both in a first direction 4 and in a second direction. This results in a common surface of the entire solar module arrangement, which comprises the surfaces of the individual solar modules 2.

The solar module arrangement is inclined at an angle to the horizontal in order to optimize the solar radiation in its efficiency. In this case the solar module arrangement is set higher in the rear region than in the front region.

The individual solar modules 2 arranged in the upper region have a common edge region 3 on which the entire cleaning apparatus according to the invention is suspended. In addition, the cleaning apparatus is supported with respect to the surfaces of the individual solar modules, so that the inherent weight of the cleaning apparatus is carried both by the surfaces of the solar modules and by the edge region 3.

For the suspension of the cleaning apparatus on the upper edge region 3, rollers 8a and 8b are mounted on the upper side of the edge region 3. These rollers 8a, 8b are connected to a fastening element 10a, 10b by means of a lever structure 9a, 9b, in which case the drive device 6 is fastened to the fastening element 10a and 10b. Alternatively, instead of the drive device 6, a brush frame 15 in which a cylindrical brush made elongate can be attached.

The drive device 6 is provided on its underside, i.e. facing the surface of the solar modules 2, with two drive units 7a and 7b which are preferably caterpillar-like rubber loops which are guided around the cylinder and are driven by this. These drive units 7a and 7b are used for a movement of the drive device 6 in the direction of the first direction 4 or the movement direction 4, so that rolling along by means of the rollers 8a and 8b on the edge region 3 and travelling of the drive device 6 together with the brush frame 15 from left to right or vice versa are possible.

In order to fasten the brush frame 15, the right-hand side 6a of the drive device 6 has two projection elements 11 a and 11 b on which is fastened a rod 12 which extends in an elongate manner and which extends in the second direction. This rod 12 has bores in order to receive in them two rods 13a and 13b which are orientated in the vertical direction 20.

The rods 13a and 13b are fastened to the brush frame 15 on its wall 15c on the left-hand side by means of holding elements 14a, 14b arranged on the top side and underside.

A design of this type makes it possible for the rods 12 to be able to move upward and downwards (in the direction 20) on account of the loose arrangement of the two rods 13a and 13b inside the bores in these rods and as a result for the brush frame 15 to be able to give way upwards in the event of irregularities occurring on the surfaces of the solar modules 2. The brush frame 15 is provided in the interior thereof with the cylindrical brush 18 which is made cylindrical, the brush 18 extending over the entire length with respect to the direction 5 of the entire solar module arrangement, so that the solar module arrangement is cleaned from the very top to the very bottom in a reliable manner. The brush is fastened so as to be able to rotate by means of a longitudinal axis at the end face on the brush frame walls 15a and 15b. This becomes clear by the reference signs 16a and 16b.

An additional motor 17 allows the driving of the longitudinal axis 16a, 16b to cause the brush 18 to rotate.

The rotation of the brush takes place preferably in accordance with the arrow direction 19, in such a way that on the surface of the solar modules the direction of rotation takes place opposite the direction of movement of the entire cleaning apparatus from left to right according to the direction 4.

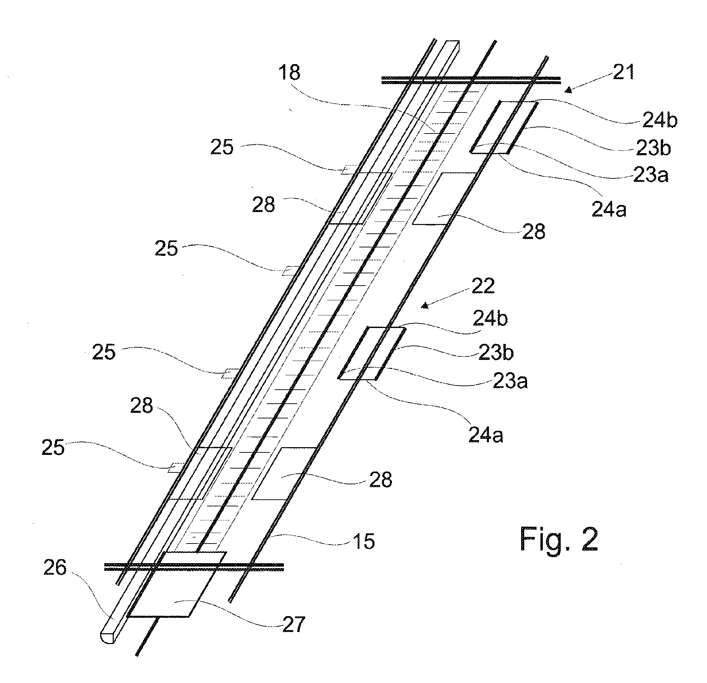

A cleaning brush according to a preferred embodiment is reproduced in figure 2 in a cut-away illustration which reproduces a perspective view from below. The cleaning brush 18 is in turn arranged inside a brush frame 15, in which case a motor 27 can be arranged inside the cross member on grounds of stability.

The motor 27 is used for the rotational movement of the brush 18.

On account of its great length which can amount for example from 1 m to 10 m, the brush 18 can undergo oscillations in the radial direction which are not desired during movement. To this end, the inside of the brush frame has attached to it stabilization spacer members 28 which are intended to prevent oscillation in a reciprocating manner which occurs in the vertical direction 20 in the movement direction, by this brush being restricted in its movement by these stabilization spacer members 28.

In addition, support elements 21, 22 in the manner of rollers or wheels, which in each case have two rollers 23a, 23b which are connected to each other by means of two connecting plates 24a and 24b, are arranged on the underside. Rollers 23a, 23b of this type are used for supporting the brush and the brush frame 15 with respect to the surfaces of the solar modules and for carrying out a rolling movement in the movement direction 4. When rollers 23a, 23b of this type are used, a stable movement from left to right or from right to left in the direction 4 is made possible, without major deviations occurring with respect to the movement upwards or downwards. The rollers 23a, 23b can be weight support brushes, which are more capable to rotate over small bumps as for example screws of the solar modules without any difficulties.

In addition, a water application device is provided which essentially comprises a tank 26 and individual water nozzles 25, the water nozzles 25 preferably being arranged in front of the brush 18, to permit water for spraying the surface of the solar modules before the brush 18 travels over the surface of the solar modules.

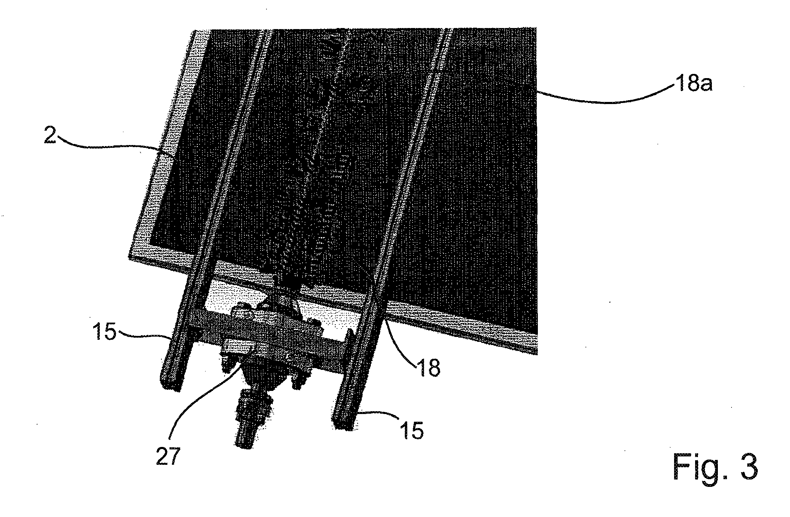

A cut-away view of a cleaning brush together with the brush frame according to an embodiment of the invention is reproduced in a plan view in figure 3. Components which are the same and which have the same significance are provided with the same reference signs.

The brush frame 15 in turn has inside a cross member a motor 27 which is arranged therein and which is used for the rotation of the brush 18.

The brush 18 is applied to the surface of the solar module 2.

In this case the brush 18 advantageously has a spiral arrangement of the brush elements 18a so as to effect in this way a removal of the dirt to the lower edge region of the entire solar module arrangement.

In this case the brush unit 18 advantageously has brush elements with a spiral arrangement of the brush bristles 18a so as to effect in this way a removal of the dirt to the lower edge region of the entire solar module arrangement. The cleaning effect of the spiral arrangement of the brush bristles of brush elements is reduced compared to a complete cylindrical arrangement of the brush bristles. However, in case of the spiral arrangement there is a reduced frictional force when these brush elements are rotating over the surface of the solar modules. Thus, there is a reduced input energy in order to bring the brush elements in rotation. Since a typical solar module is more difficult to be cleaned at the edge areas, it is possible to combine a brush unit by using brush elements with cylindrical complete surrounding bristles at the edge area and brush elements with a spiral arrangement of the brush bristles in the centre part of the solar modules. Preferably, the brush element with cylindrical arranged bristles are positioned at the lower edge area and the brush elements with the spiral arrangement of the brush bristles are positioned in the centre and in the upper edge area of the solar module, since the most dirty areas are in the lower part of the solar module surfaces.

The inventive cleaning apparatus does not need any guide profile arrangements, since it can be positioned in a simple way on the solar module edges and are capable of rolling in the first direction on the surfaces of the solar modules by using rollers 8a and 8b.

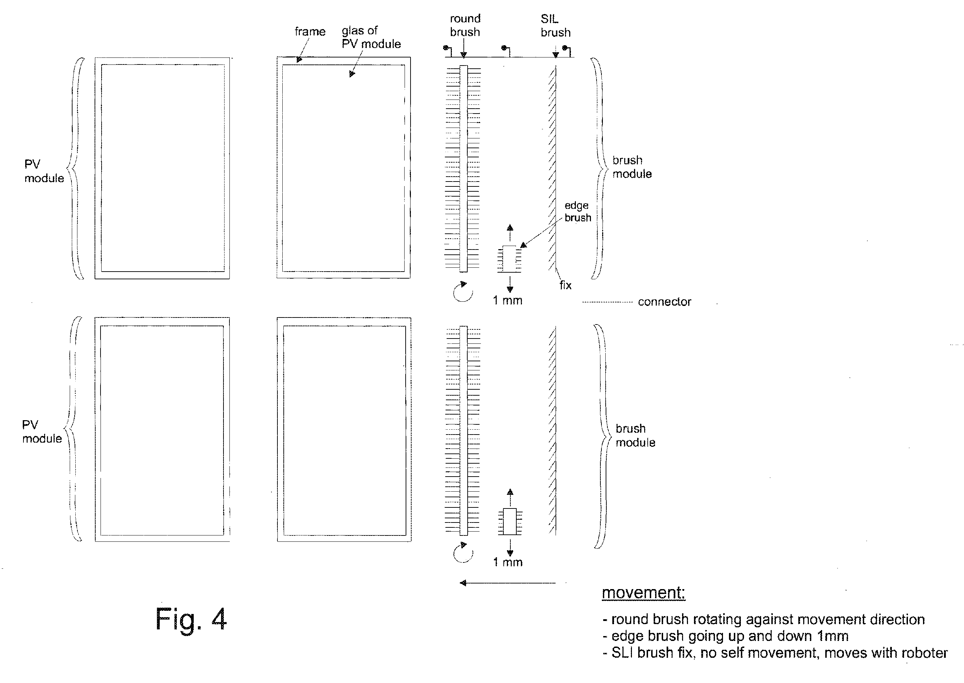

Figure 4 shows a schematic view of a cleaning brush according to one embodiment of the invention. If two or more rows of solar modules are arranged parallel, wherein the distance between the two rows are small, the brush can be divided into two parts, namely one brush part for the one row and one brush part for the other row. However, both brush parts are connected by common access. Further, the upper and lower edge brushes can be positioned, which are moved up and down in a parallel direction to the surface of the solar modules. This movement is usually one millimetre in order to clean the edges and/or the frames of the photovoltaic modules (solar modules).

Parallel to the cylindrical rotation brushes normal brushes in a long version without any rotation or lateral movement can be arranged in order to clean in addition the surfaces of the solar modules after the rotation brushes have loosen the dirt off the surfaces.

As a result, one brush module comprises one rotation brush, one edge brush and one linear brush, wherein two brush modules can be arranged for each row of solar modules and can be connected together.

### List of reference

- 1: overall view
- 2: solar modules
- 3: edge region
- 4: first direction
- 5: second direction
- 6: drive device
- 6a: right-hand side
- 8a, 8b: rollers
- 7a, 7b: drive units
- 9a, 9b: lever structure
- 10a, 10b: fastening element
- 11a, 11b: projection element
- 12: rod
- 13a, 13b: rods
- 14a, 14b: holding elements
- 15: brush frame
- 15a, 15b: brush frame walls
- 15c: frame wall
- 16a, 16b: longitudinal axis on the end face
- 17: motor
- 18: brush
- 18a: brush elements
- 19: arrow direction
- 20: vertical direction
- 21: support elements
- 22: support elements
- 23a, 23b: rollers
- 24a, 24b: connecting plates
- 25: water nozzles
- 26: tank
- 27: motor
- 28: spacer member

## Claims

1. A cleaning apparatus for the surface cleaning of a plurality of solar modules (2) arranged adjacent to one another and at an angle with respect to the horizontal, comprising
- at least one drive device (6) configured to be connected to at least one common upper edge region (3) of the solar modules (2)
with
at least one substantially cylindrical elongate brush (18) which for cleaning purposes rotates about its longitudinal axis (16a, 16b) with a direction of rotation (19) capable of being pre-determined and at a rotational speed capable of being pre-determined, wherein the at least one brush (18) extends in the longitudinal axial direction (5) so as to be able to cover a plurality of solar modules (2) arranged adjacent to one another in this direction (5), and the at least one brush (18) is connected to the at least one drive device (6), wherein the at least one drive device (6) is capable of travelling itself on the surface of the solar modules in a first direction (4) for moving the cleaning apparatus, **characterized in that** a brush frame (15) is connected on a longitudinal side by means of at least one connecting element (11a, 11b) to the at least one drive device (6) which is elongatable in the longitudinal axial direction (5) of the at least one brush and is arranged behind and/or before the at least one brush (18).

2. A cleaning apparatus according to claim 1, **characterized in that** the longitudinal axial direction (5) of the at least one brush (18) is orientated as a second direction (5) at a right angle to the first direction (4).

3. A cleaning apparatus according to one of the preceding claims, **characterized in that** on the surface of the solar modules the direction of rotation (19) of the at least onerotating brush (18) is opposed to the first direction (4) of the movement of the at least one drive device (6).

4. A cleaning apparatus according to any one of the preceding claims, **characterized in that** the at least one brush (18) is mounted in a rotatable manner at the end face in the brush frame (15) connected to the at least one drive device (6).

5. A cleaning apparatus according to claim 4, **characterized by** first support elements (21, 22) in the manner of rollers and/or wheels, which support the at least one brush (18) against the surfaces of the solar modules (2), wherein the support elements (5) are capable of rolling in the first direction (4) on the surfaces of the solar modules.

6. A cleaning apparatus according to claim 6, **characterized in that** the at least one connecting element (11a, 11b) has a pivot axis extending in the second direction (5) between a first and a second connecting component, wherein the first connecting component is connected to the brush frame (15) and the second connecting component is connected to the at least one drive device (6).

7. A cleaning apparatus according to any of the preceding claims, **characterized in that** the at least one connecting element (11a, 11b; 14a, 14b; 13a, 13b) has at least two rods (13a, 13b) which extend at a right angle to the first and second directions (4, 5) and which face in a third direction (20) and which are fastened to the brush frame (15c) and which are embraced in such away by at least one third connecting component (14a, 14b) connected to the at least one drive device (6) that the brush frame (15) is displaceable upwards and downwards in the third direction (20) with respect to the at least one drive device (6).

8. A cleaning apparatus according to any one of the preceding claims, **characterized by** at least two second support elements (8a, 8b; 9a, 9b; 10a, 10b) in the manner of rollers and/or wheels and/or brushes for the suspended support of the cleaning apparatus on the upper edge region (3) in such a way that the entire cleaning apparatus is suspended with portions of its inherent weight on a top edge of the upper edge region (3).

9. A cleaning apparatus according to any one of the preceding claims, **characterized in that** one brush (18) is arranged in each case before and after the at least one drive device (6) with respect to the first direction (4).

10. A cleaning apparatus according to any one of the preceding claims, **characterized by** a water application device (26, 25) for applying water to the surfaces of the solar modules (2) in the region of the at least one brush (18).

11. A cleaning apparatus according to claim 10, **characterized in that** the water application device (26, 25) comprises individual nozzles, which can be arranged upstream of the at least one brush with respect to the first movement direction.

12. A cleaning apparatus according to claim 10 or 11, **characterized in that** the water application device (26, 25) comprises a tank for containing water.

13. A cleaning apparatus according to claims 10-12, **characterized in that** the rain water falling on the surface of the solar modules is collectable for filling up the water tank of the water application device (26, 25).

14. A cleaning apparatus according to any of the preceding claims, **characterized by** sensors for detecting dirty areas on the surfaces of the solar modules.

## Patentansprüche

1. Reinigungsvorrichtung zur Oberflächenreinigung einer Vielzahl von Solarmodulen (2), die benachbart zueinander und in einem Winkel bezüglich der Horizontalen angeordnet sind, umfassend
- mindestens eine Antriebsvorrichtung (6), die dazu konfiguriert ist, mit mindestens einem gemeinsamen oberen Randbereich (3) der Solarmodule (2) verbunden zu sein
mit
zumindest einer im Wesentlichen länglichen zylindrischen Bürste (18), die zu Reingunszwecken um ihre Längsachse (16a, 16b) mit einer Rotationsrichtung (19), die vorbestimmt werden kann, und einer Rotationsgeschwindigkeit, die vorbestimmt werden kann, rotiert, wobei die mindestens eine Bürste (18) sich in die Längsachsenrichtung (5) erstreckt, so dass sie eine Vielzahl von Solarmodulen (2) bedecken kann, die in dieser Richtung (5) benachbart zueinander angeordnet sind, und wobei die mindestens eine Bürste (18) mit der mindestens einen Antriebsvorrichtung (6) verbunden ist, wobei die mindestens eine Antriebsvorrichtung (6) geeignet ist, sich selbst auf der Oberfläche der Solarmodule in eine erste Richtung (4) zu verschieben, um die Reinigungsvorrichtung zu bewegen,
**dadurch gekennzeichnet, dass**
ein Bürstenrahmen (15) mit der zumindest einen Antriebsvorrichtung (6), die in der Längsachsenrichtung (5) der Bürste verlängerbar ist und hinter und/oder vor der zumindest einen Bürste (18) angeordnet ist, an einer Längsseite mittels zumindest eines Verbindungselements (11 a, 11 b) verbunden ist.

2. Reinigungsvorrichtung nach Anspruch 1,
**dadurch gekennzeichnet, dass**
die Längsachsenrichtung (5) der zumindest einen Bürste (18) als eine zweite Richtung (5) in einem rechten Winkel zu der ersten Richtung (4) orientiert ist.

3. Reinigungsvorrichtung nach einem der vorangegangenen Ansprüche,
**dadurch gekennzeichnet, dass**
auf der Oberfläche der Solarmodule die Rotationsrichtung (19) der zumindest einen rotierenden Bürste (18) entgegengesetzt zu der ersten Richtung (4) der Bewegung der zumindest einen Antriebsvorrichtung (6) ist.

4. Reinigungsvorrichtung nach einem der vorangegangenen Ansprüche,
**dadurch gekennzeichnet, dass**
die zumindest eine Bürste (18) drehbar an der Stirnfläche in dem Bürstenrahmen (15), der mit der zumindest einen Antriebsvorrichtung (6) verbunden ist, montiert ist.

5. Reinigungsvorrichtung nach Anspruch 4,
**gekennzeichnet durch**
erste Stützelemente (21, 22) in der Art von Rollen und/oder Rädern, die die zumindest eine Bürste (18) gegenüber den Oberflächen der Solarmodule (2) stützen, wobei die Stützelemente (5) dazu imstande sind, in die erste Richtung (4) auf den Oberflächen der Solarmodule zu rollen.

6. Reinigungsvorrichtung nach Anspruch 5,
**dadurch gekennzeichnet, dass**
das zumindest eine Stützelement (11 a, 11 b) eine Schwenkachse aufweist, die sich in die zweite Richtung (5) zwischen einem ersten und einem zweiten Verbindungselement erstreckt, wobei das erste Verbindungselement mit dem Bürstenrahmen (15) verbunden ist und das zweite Verbindungselement mit der zumindest einen Antriebsvorrichtung (6) verbunden ist.

7. Reinigungsvorrichtung nach einem der vorangegangenen Ansprüche,
**dadurch gekennzeichnet, dass**
das zumindest eine Verbindungselement (11a, 11 b, 14a, 14b; 13a, 13b) mindestens zwei Stäbe (13a, 13b) aufweist, die sich in einem rechten Winkel zu den ersten und zweiten Richtungen (4, 5) erstrecken und die in einer dritten Richtung (20) gegenüberstehen und die an dem Bürstenrahmen (15c) befestigt sind und die in einer solchen Weise durch zumindest ein drittes Verbindungselement (14a, 14b), das mit der zumindest einen Antriebsvorrichtung (6) verbunden ist, umfasst werden, dass der Bürstenrahmen (15) nach oben und unten in der dritten Richtung (20) bezüglich der zumindest einen Antriebsvorrichtung (6) verschoben werden kann.

8. Reinigungsvorrichtung nach einem der vorangegangenen Ansprüche,
**gekennzeichnet durch**
zumindest zwei zweite Stützelemente (8a, 8b; 9a, 9b; 10a, 10b) in der Art von Rollen und/oder Rädern und/oder Bürsten für die Aufhängestützung der Reinigungsvorrichtung an dem oberen Randbereich (3) derart, dass die gesamte Reinigungsvorrichtung an Teilen seines inhärenten Gewichts auf einem oberen Rand des oberen Randbereichs aufgehängt ist.

9. Reinigungsvorrichtung nach einem der vorangegangenen Ansprüche,
**dadurch gekennzeichnet, dass**
eine Bürste (18) in jedem Fall vor oder hinter der zumindest einen Antriebsvorrichtung (6) bezüglich der ersten Richtung (4) angeordnet ist.

10. Reinigungsvorrichtung nach einem der vorangegangenen Ansprüche,
**gekennzeichnet durch**
eine Wassereinsatzvorrichtung (26, 25) zum Aufbringen von Wasser auf die Oberflächen der Solarmodule (2) in dem Bereich der zumindest einen Bürste (18).

11. Reinigungsvorrichtung nach Anspruch 10,
**dadurch gekennzeichnet, dass**
die Wassereinsatzvorrichtung (26, 25) einzelne Wasserdüsen umfasst, die oberhalb der zumindest einen Bürste (18) bezüglich der ersten Bewegungsrichtung angeordnet werden können.

12. Reinigungsvorrichtung nach Anspruch 10 oder 11,
**dadurch gekennzeichnet, dass**
die Wassereinsatzvorrichtung (26, 25) einen Tank zum Beinhalten von Wasser umfasst.

13. Reinigungsvorrichtung nach den Ansprüchen 10-12,
**dadurch gekennzeichnet, dass**
das Regenwasser, das auf die Oberfläche der Solarmodule fällt, sammelbar zur Befüllung des Wassertanks der Wassereinsatzvorrichtung (26, 25) ist.

14. Reinigungsvorrichtung nach einem der vorangegangenen Ansprüche,
**gekennzeichnet durch**
Sensoren zur Erkennung schmutziger Bereiche auf den Oberflächen der Solarmodule.

## Revendications

1. Appareil de nettoyage pour le nettoyage de surface d'une pluralité de modules solaires (2) agencés adjacents les uns par rapport aux autres et sous un angle par rapport à l'horizontale, comprenant :
- au moins un dispositif d'entraînement (6) configuré de façon à être connecté à au moins une région de bord supérieur commune (3) des modules solaires (2)
avec
au moins une brosse allongée sensiblement cylindrique (18) qui tourne, pour des besoins du nettoyage, autour de son axe longitudinal (16a, 16b) avec une direction de rotation (19) qui peut être prédéterminée et avec une vitesse de rotation qui peut être prédéterminée ;
dans lequel la ou les brosses (18) s'étendent dans la direction axiale longitudinale (5) de façon à pouvoir couvrir une pluralité de modules solaires (2) agencés adjacents les uns par rapport aux autres dans cette direction (5), et la ou les brosses (18) sont connectées au ou aux dispositifs d'entraînement (6), dans lequel le ou les dispositifs d'entraînement (6) peuvent se déplacer par eux-mêmes sur la surface des modules solaires dans une première direction (4) de façon à déplacer l'appareil de nettoyage, **caractérisé en ce qu'**une armature de brosse (15) est connectée sur un côté longitudinal au moyen d'au moins un élément de connexion (11a, 11 b) au ou aux dispositifs d'entraînement (6), qui peut s'allonger dans la direction axiale longitudinale (5) de la ou des brosses (18) et est agencé derrière et/ou devant la ou les brosses (18).

2. Appareil de nettoyage selon la revendication 1, **caractérisé en ce que** la direction axiale longitudinale (5) de la ou des brosses (18) est orientée selon une deuxième direction (5) qui fait un angle droit par rapport à la première direction (4).

3. Appareil de nettoyage selon l'une quelconque des revendications précédentes, **caractérisé en ce que**, sur la surface des modules solaires, la direction de rotation (19) de la ou des brosses rotatives (18) est opposée à la première direction (4) du déplacement du ou des dispositifs d'entraînement (6).

4. Appareil de nettoyage selon l'une quelconque des revendications précédentes, **caractérisé en ce que** la ou les brosses (18) sont montées de manière rotative au niveau de la face d'extrémité dans l'armature de brosse (15) connectée au ou aux dispositifs d'entraînement (6).

5. Appareil de nettoyage selon la revendication 4, **caractérisé par** des premiers éléments de support (21, 22) similaires à des rouleaux et/ou à des roues, qui supportent la ou les brosses (18) contre les surfaces des modules solaires (2), dans lequel les éléments de support (5) peuvent rouler dans la première direction (4) sur les surfaces des modules solaires.

6. Appareil de nettoyage selon la revendication 5, **caractérisé en ce que** le ou les éléments de connexion (11a, 11b) présentent un axe de pivot qui s'étend dans la deuxième direction (5) entre un premier et un deuxième composants de connexion, dans lequel le premier composant de connexion est connecté à l'armature de brosse (15)) et le deuxième composant de connexion est connecté au ou aux dispositifs d'entraînement (6).

7. Appareil de nettoyage selon l'une quelconque des revendications précédentes, **caractérisé en ce que** le ou les éléments de connexion (11a, 11b ; 14a, 14b ; 13a, 13b) présentent au moins deux tiges (13a, 13b) qui s'étendent à angle droit par rapport aux première et deuxième directions (4, 5) et qui font face à une troisième direction (20), qui sont fixées sur l'armature de brosse (15c) et qui sont reliées par un troisième composant de connexion (14a, 14b) au moins connecté au ou aux dispositifs d'entraînement (6), de telle manière que l'armature de brosse (15) puisse se déplacer vers le haut et vers le bas dans la troisième direction (20) par rapport au ou aux dispositifs d'entraînement (6).

8. Appareil de nettoyage selon l'une quelconque des revendications précédentes, **caractérisé par** au moins deux deuxièmes éléments de support (8a, 8b ; 9a, 9b ; 10a, 10b) similaires à des rouleaux, et/ou à des roues, et/ou à des brosses, destinés à un support suspendu de l'appareil de nettoyage sur la région de bord supérieur (3) de telle manière que tout l'appareil de nettoyage est suspendu avec des parties de son poids inhérent qui se situent sur un bord supérieur de la région de bord supérieur (3).

9. Appareil de nettoyage selon l'une quelconque des revendications précédentes, **caractérisé en ce qu'**une brosse (18) est agencée dans tous les cas avant et après le ou les dispositifs d'entraînement (6) par rapport à la première direction (4).

10. Appareil de nettoyage selon l'une quelconque des revendications précédentes, **caractérisé par** un dispositif d'application d'eau (26, 25) destiné à appliquer de l'eau sur les surfaces des modules solaires (2) dans la région de la ou des brosses (18).

11. Appareil de nettoyage selon la revendication 10, **caractérisé en ce que** le dispositif d'application d'eau (26, 25) comprend des buses individuelles, qui peuvent être agencées en amont de la ou des brosses par rapport à la première direction de déplacement.

12. Appareil de nettoyage selon la revendication 10 ou la revendication 11, **caractérisé en ce que** le dispositif d'application d'eau (26, 25) comprend un réservoir destiné à contenir de l'eau.

13. Appareil de nettoyage selon l'une quelconque des revendications 10 à 12, **caractérisé en ce que** l'eau de pluie qui tombe sur la surface des modules solaires peut être recueillie de façon à remplir le réservoir d'eau du dispositif d'application d'eau (26, 25).

14. Appareil de nettoyage selon l'une quelconque des revendications précédentes, **caractérisé par** des capteurs destinés à détecter les zones sales qui se situent sur les surfaces des modules solaires.
